# EUROPEAN PATENT SPECIFICATION

(11) **EP 3 432 534 B1**
(45) Date of publication and mention of the grant of the patent: **24.02.2021**
(21) Application number: 17181616.8
(22) Date of filing: 17.07.2017
(51) Int. Cl.: H04L 29/06, H04W 4/00, H04W 12/08

(54) **LOCAL AUTHORIZATION DECISION METHOD**
LOKALES AUTORISIERUNGSENTSCHEIDUNGSVERFAHREN
PROCÉDÉ DE DÉCISION D'AUTORISATION LOCALE

(43) Date of publication of application: 23.01.2019
(73) Proprietor: Atos IT Solutions and Services GmbH, 81739 München (DE)
(72) Inventor: GÜTTNER, Ondrej, 790 01 Jeseník (CZ)
(74) Representative: Patentanwaltskanzlei WILHELM & BECK

(56) References cited:
- US-A1- 2015 365 436
- US-A1- 2017 063 931
- SEITZ LUDWIG ET AL: "Authorization framework for the Internet-of-Things", 2013 IEEE 14TH INTERNATIONAL SYMPOSIUM ON A WORLD OF WIRELESS, MOBILE AND MULTIMEDIA NETWORKS (WOWMOM), IEEE, 4 June 2013 (2013-06-04), pages 1-6, XP032478131, DOI: 10.1109/WOWMOM.2013.6583465 ISBN: 978-1-4673-5827-9 [retrieved on 2013-08-20]

## Description

### FIELD

The invention relates to an authorization decision method in a distributed environment.

### BACKGROUND

Contemporary Information technology (IT) environment is formed by a complex interconnected distributed network of heterogeneous devices. A main object that occurs in such an environment is to decide which entity is authorized on which resource to carry out which operation.

At present, an authorization decision is typically delegated to a trusted third party that is realized as a centralized entity known as authorization server. This partially results from the fact that resources have been managed and stored centrally.

In general, if a requestor asks a resource server via a client device for a resource, the resource server approaches an authorization server for an authorization decision either directly or via a redirection through the client device. The authorization server utilizes policy storage to store policies declared by resource owners, and, optionally, a user data storage. The user data storage contains the previously collected requestor data that may be leveraged in some policy types, e.g. an adaptive access control.

With the evolution of IT and the arrival of Internet of Things (IoT), the resources that need to be protected are often connected to local devices such as physical devices, vehicles, buildings, and other items. These items then represent the resource servers as they really enable the access to the resources. The hardware of these devices is often not very powerful and often has poor connection capabilities. This is in contrast to the approach utilizing a centralized entity such as an authorization server which has high communication complexity.

A technique to address the lack of interoperability among devices dealing with identity establishment in a distributed network is the Fast Identity Online (FIDO) Standard launched in February 2013. The FIDO standard depends on an attestation principle, which guarantees a trust between components of the distributed architecture. However, FIDO standard proposes an authentication framework. The authentication is only one part of an authorization process.

Further, transaction verification carried out by FIDO standard enables a resource owner to decide upon a transaction concerning a resource of the resource owner. FIDO standard does not deal with an authorization process which leads to a decision upon an action concerning the requestor being inequivalent to the resource owner. Moreover, FIDO standard needs a centralized authentication server as a trusted entity to declare policies used in the authentication process. Such a policy is further necessary for any requestor trying to authenticate.

An authorization decision method with the features of the first part of claim 1 is known from US2017/063931A1

### SUMMARY

The object of the present invention is to provide an improved authorization decision method in a distributed environment.

This object is met by a method according to claim 1. Preferred embodiments are disclosed in the subclaims.

An authorization decision method is carried out on a distributed environment comprising a policy verification distributor holding policy verification data identifying a policy declared by a resource owner and applicable on a resource and a requestor and a policy definition distributor holding policy definition data about the policy. A requestor asks a resource server via a client for the resource and accompanies the request with an authorization decision. The client approaches the policy definition distributor to get the policy definition data in order to decide whether a policy relevant for the resource and the requestor is available. The resource server approaches the policy verification distributor to get the policy verification data in order to verify the authorization decision.

According to an embodiment the resource owner transmits the policy verification data to a policy registrator in order to register a valid policy, the policy registrator performing an authorization action deciding whether the resource owner is allowed to declare the policy for the resource. Upon registering the policy as valid the policy registrator transmits the policy verification data to the policy verification distributor.

According to an embodiment as an initial step the requestor addresses the client to get the resource, as a subsequent step the client decides whether a policy relevant for the resource and the requestor is available based on the policy definition data from the policy definition distributor, as a subsequent step, if the policy is available, the client performs a decision signing process, as a subsequent step the client sends the request for the resource and the signed decision to the resource server, as a subsequent step the resource server performs a verification process based on the policy verification data received from the policy verification distributor, and as a subsequent step, if verification was successful, the resource server sends the requested resource to the client.

According to an embodiment, in order to perform the decision signing process the client sends a request for signing the decision to a requestor authentication module, wherein as a subsequent step the requestor authentication module returns the decision with a signature to the client, and wherein as a subsequent step the client signs the decision with the signature in an attestation process.

According to an embodiment the ownership of the resource is represented during the initial registration of resource by knowledge of a unique identifier connected to the resource, subsequently by knowledge of a cryptographic primitive protecting bound to the identifier.

According to an embodiment the resource server approaches the policy verification distributor for the last record of policy verification data with respect to the resource identifier, wherein in response the policy verification distributor transfers the record in a trusted manner.

According to an embodiment the requestor approaches the policy definition distributor for the record of policy definition data with respect to the resource identifier and a requestor identifier, wherein in response the policy definition distributor may transfer the record in a trusted manner.

According to an embodiment a blockchain-based implementation of the policy declaration process of the policy registrator and the policy verification distributor is carried out.

According to an embodiment a trusted computation is carried out.

According to an embodiment, a requestor authentication module and/or the client include a trusted platform module.

The authorization decision method is in particular suitable for the world of IoT in which a system design is decentralized to a high degree. In such a distributed environment, the data privacy is a main issue. With respect to the data related to the requestor, IoT devices generally collect private user data for an evaluation. However, the originator of the data i.e. the requestor would like to have control over these data. According to the authorization decision method the policy stored on the policy server references the user data, while these data are stored and processed locally under the originator's control only. With respect to the policy data, these policy data may contain private information. The authorization decision method prevents the policy data to be read by anybody but the resource owner and the requestor.

Devices of a distributed environment are often constrained in both ways, in communication capability and computational power. The authorization decision method employs a protocol designed to reduce the number of transferred messages that are necessary to establish the authorization decision. Moreover, the protocol relaxes the communication constraints by switching from synchronous mode to asynchronous mode. In consequence, there is no demand for powerful real-time-employed centralized entities.

The dynamicity within a distributed environment, namely changes in the set of devices, makes it difficult to manage a consistent trust throughout the system. The authorization decision method addresses the trust demands by relaxing the real-time inter-device trust establishment. In addition, the protocol provides the trust in the authorization decision as implicit for both parties, i.e. the requestor and the resource server.

According to an embodiment blockchain technology is not only used for a requestor registration and for a policy declaration during the establishing phase, but also for an evaluation and for a protocol process.

The properties of a trusted database according to authorization decision method may be blockchain-based. The implementation can be built over an Ethereum framework as it would enable to capture the implementations specifics. Ethereum is a decentralized framework for distributed applications based on blockchain technology. Ethereum abstracts from the specific blockchain implementation, such as Bitcoin, and provides a full Turing state machine.

The trusted computation of the authorization decision according to the authorization decision method is done by the requestor. In contrast to the Ethereum approach which lets peers connected into the system to do the trusted computation, there is no loss of the locality in the computation.

The invention is defined in the appended claims.

### BRIEF DESCRIPTION OF THE DRAWINGS

The invention is explained in greater detail below on the basis of preferred exemplary embodiments with reference to Figures, in which:
Figure 1 shows an authorization decision process architecture,
Figure 2 shows a policy retrieval process,
Figure 3 shows a policy declaration process, and
Figure 4 shows a resource request process, wherein Figure 4A contains a first part and Figure 4B contains a second part.

### DETAILED DESCRIPTION

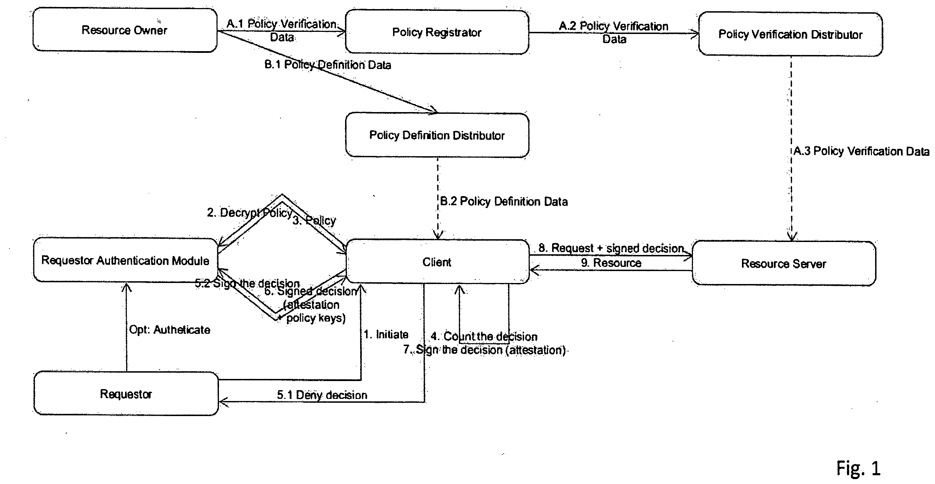

Figure 1 presents the basic principles for an authorization decision process architecture. The following entities with roles and competencies are involved:
A resource owner is the originator of a policy applicable on a resource.

A policy registrator ensures the trust in a process of registering a valid policy.

A policy verification distributor ensures the trust in data distributed to enable to identify the valid policy.

A policy definition distributor possesses information about the declared policy.

A requestor initiates an action.

A resource server manages an access to at least a resource.

A client is a tool for the requestor to approach the resource.

A requestor authentication module represents the requestor's identity.

All of the entities can have multiple instances in a single system.

Figure 1 further presents the data exchange paths between the various entities. The authorization decision process is divided in two sections: A policy declaration and retrieval process covering steps A.1, A.2, A.3, B.1 and B.2 of Figure 1, and a resource request process covering steps 1 to 9 and an optional authenticate step of Figure 1.

### Policy Declaration and Retrieval Process

The resource owner declares at least a policy applicable on a resource and a requestor. This means that a single policy is held in a single point of time for a single resource and a single requestor.

The resource owner transmits policy verification data to the policy registrator (step A.1). The policy registrator ensures the trust in the process of registering the valid policy, including some form of authorization of the request for the registration. The processing of the policy registrator includes an authorization action deciding whether the resource owner can actually declare the policy for the resource.

After registering the policy as valid, the policy registrator transmits the policy verification data to the policy verification distributor (step A.2). The policy verification distributor ensures the trust in data distributed to enable to identify the valid policy.

The authorization decision step of the policy registrator can self-apply using the infrastructure implementing the authorization decision method shown in Figure 1. In such case, the policy registrator is both a requestor and a client. The policy verification distributor is a resource server, while simultaneously using itself as a source of policy identifiers. There must be already publicly declared initial policies in the policy definition distributor dealing with the registration action.

The policy registrator and the policy verification distributor may be coupled and may occur as a single entity providing multiple tasks. The policy registrator basically decides, which policy will be permitted to be later distributed by the policy verification distributor. Any policy is applicable at the point of time, when it becomes distributed by any of the instance of the policy verification distributor.

The policy verification distributor transfers the policy verification data to any resource server asking for them (step A.3).

The resource owner additionally transmits policy definition data to the policy definition distributor (step B.1), so that the policy definition distributor possesses an information about the declared policy. The policy definition distributor is not required to be trusted and provides simply a distribution of the policy throughout the system. The existence of policy definition distributor aims on performance requirements.

The policy definition data are sent by the policy definition distributor to any requestor asking for them via the client device (step B.2). This may be done without an authentication or authorization action. In the case the policy is perceived as secret information, there has to be an authentication action before sending the policy to the client device. In the latter case, the policy definition distributor has to be trusted.

To achieve the anonymity of the requestor during the requesting for a resource, the policy verification data gotten from the policy verification distributor mustn't be linkable with the policy definition data gotten from policy definition distributor. The policy verification data may be represented by a digital signature key pairs. The digital signature algorithm used must ensure the unlinkability between the public and private key.

In the case, the anonymity of the requestor is an unwanted feature, the key pair can be replaced by a simple identifier. This approach makes the initial policy declaration process less computationally demanding. A random identifier generation may be used instead of a public key generation.

### Resource Request Process

The requestor may carry out an authentication process with a requestor authentication module having the function of presenting endpoint requestor's identity. The requestor may be registered in a public repository.

As an initial action the requestor addresses the client as a mediator to get the resource (step 1). In succession the client obtains the policy definition data relevant for the resource and the requestor from the policy definition distributor (step B.2). According to Figure 1 the policy data are encrypted. Then, the encrypted policy is send to the requestor authentication module for decryption (step 2). The decrypted policy is retransmitted to the client (step 3). This relaxes the trust constraints in the client. If the client is trusted to a degree, that it is able to operate as the requestor authentication module, the decryption can be done by the client itself.

Then the client decides whether a policy relevant for the resource and the requestor is available and counts the decision (step 4) .

After the decision has been made, the client either directly informs the requestor about a deny decision (step 5.1) or performs a decision signing process. In order to perform the decision signing process the client sends a request for signing the decision to the requestor authentication module (step 5.2). The requestor authentication module returns the decision with a signature to the client (step 6). Subsequently, (step 7), the client signs decision with the signature in an attestation process. As in the case of policy decryption, the client can server, in case of appropriate trust, as both requestor authentication module and client.

Then the client sends both the request and signed decision to the resource server (step 8). After receipt of the request and the signed decision the resource server performs a verification process based on the policy verification data received from the policy verification distributor (step A.3) and the public attestation data. If verification was successful, the resource server sends the requested resource to the client (step 9).

In Summary, the requestor (real-world entity initiating the action, represented in the protocol by the requestor's authentication module) asks the resource server for the resource and accompanies the request with the authorization decision (step 8 and step 9). The client utilizes the policy definition distributor to gain the policy definition data declared by the resource owner (Step B.2). This step may be done asynchronously. The resource server further utilizes the policy verification distributor to get the policy verification data to verify the decision (Step A.3). This step may also be done asynchronously.

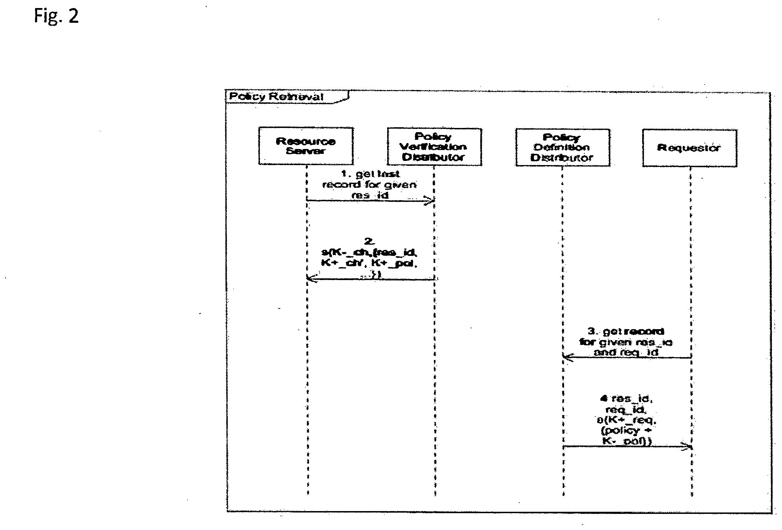

Figures 2 to 4 show embodiments of different process section of the authorization decision process. In the Figures res id represents a unique identifier connected to a resource, req_id represents a requestor identifier, K+ represents a public key and K- represents a private key for used asynchronous cryptography algorithm. K_pol{n} represents a policy key relevant to policy n which enables verification. K_ch{n} represents a change key relevant to policy n, which enables to invalidate the previous policy. e (K+req, data) represents encryption of data using the public key of the requestor. s(K-ch{n}, data) represents a signature of data using the private change key.

The initial transfer of resource ownership from the physical to the digital environment is represented by the ownership of the unique identifier res_id connected to the resource. The value of the identifier must be agreed upon between the resource owner and the resource server. The identifier may be unchangeable, i.e. static from the origin of the resource, or may be changeable to enable an out-of-bounds reset mechanism. Figure 2 depicts an embodiment of the policy retrieval process, wherein the policy verification distributor transfers the policy verification data to the resource server and the policy definition distributor sends the policy verification data to the requestor.

According to Figure 2 the resource server approaches the policy verification distributor for the last record of data with respect to the resource identifier res_id (step 1). In response the policy verification distributor sends back the record in a trusted manner. In the case of using public key cryptography as the trust ensuring mechanism, the record is signed by the private change key K-ch (step 2).

Further, according to Figure 2 the requestor asks the policy definition distributor for the record of data with the resource identifier res id and the requestor identifier req_id (step 3). In response the policy definition distributor transfers the policy record. The transfer does not need to be provided in a trusted manner as the used policy is checked by the resource server during the verification phase.

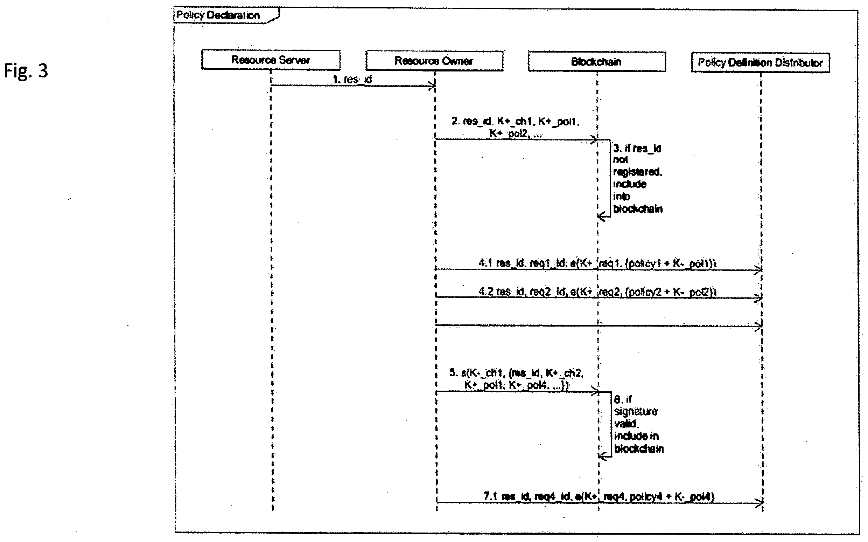

Figure 3 shows a blockchain-based Implementation of the policy declaration process. Due to its decentralized, transactional approach, blockchain technology is a choice for implementation of both the policy registrator and the policy verification distributor.

Figure 3 depicts the initial policy declaration (step 1 to step 4), followed by an update of the policy (step 5 to step 7). The process sequence of Figure 3 is as follows:
Step 1 presents the transmission of the resource identifier res_id from the resource server to the resource owner. Step 1 may be performed with any protocol leading to the state that the resource server and the resource owner both know the resource identifier res id but no further untrusted entity learn it.
Step 2 presents the initial registration process of policies initiated by the resource owner by means of blockchain technology. The resource identifier res_id registers the resource for protection by an authorization mechanism, K+_ch1 registers a new protection mechanism preventing illegal change of policy 1. K+pol1 represents the verification data of policy 1 (without a reference to the relevant requestor). Likewise, K+pol[i] represents the verification data of policy [i].
Step 3 presents a validation process performed by an entity working with blockchain.
In Steps 4.x policy definition data are transferred from the resource owner to the policy definition distributor. Step 4.1 shows the transfer of policy definition data of policy 1 and Step 4.2 shows the transfer of policy definition data of policy 2. As there can be multiple policy definition distributors, the resource owner can decide, where to send the registration. E.g., in case the resource owner knows that the policies will only locally be leveraged e.g. inside a smart home, the resource owner can send the policy to some local server.
Step 5 represents update of the policy - the private key K-ch1 is used for signing the data to enable verification of this action. In case the signing algorithm does not enable to read the signed values, the message has to explicitly add the plain form of the signed data. The message contains the currently valid set of policy verification data K+pol{n}. A new public key K+ch2 for the next change of policies is declared, if necessary for the used signature scheme.

This enables a simple form of verification in step 6. The entity verifying the data retrieves the last occurrence of change of policies for the given resource identifier res_id which contains the currently valid change public key and checks the signature against this key. Steps 7.x represent distribution of new policies to the policy definition distributor similarly to steps 4.x.

The policy registrator competency (authorization of policy declaration) implemented by the blockchain is limited to the resource ownership evaluation - there is no fine-grained authorization about what kind of policies can resource owner declare. The initial policy declaration is secured by the secrecy of the resource identifier res_id which is shared only between resource owner and resource server. After the declaration, the resource identifier res_id is made public, and the protection of the policy declaration is passed to the knowledge of the private key K-ch.

The policy declaration protocol enables the blockchain to be public (hence any entity has read/write permissions), as the necessary trust is achieved by the protocol and blockchain properties.

As of the policy retrieval, as shown in Figure 2, based on a blockchain-based implementation the blockchain is used for the role of the policy verification distributor.

With respect to the server-based implementation there can be many variants of the used authorization mechanisms, network topology, etc. It is, however, important to notice, that a general server-based solution, in contrast to blockchain based, enables to achieve finer granularity in deciding what policies may be declared by what resource owners. The resource owner can send the policies unencrypted to policy registrator (as it is a trusted entity) that decides whether they are allowed and subsequently encrypts them.

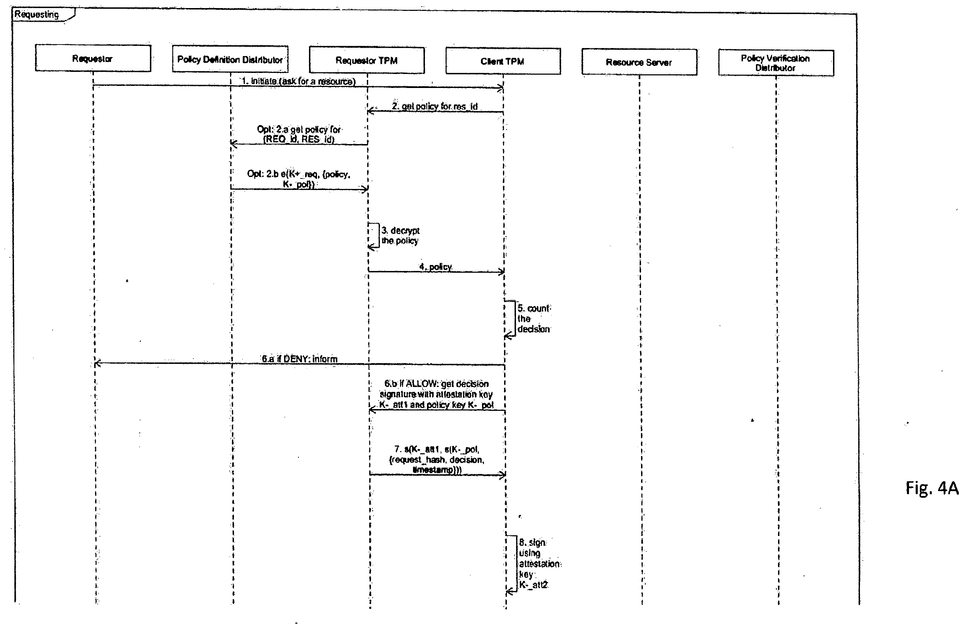

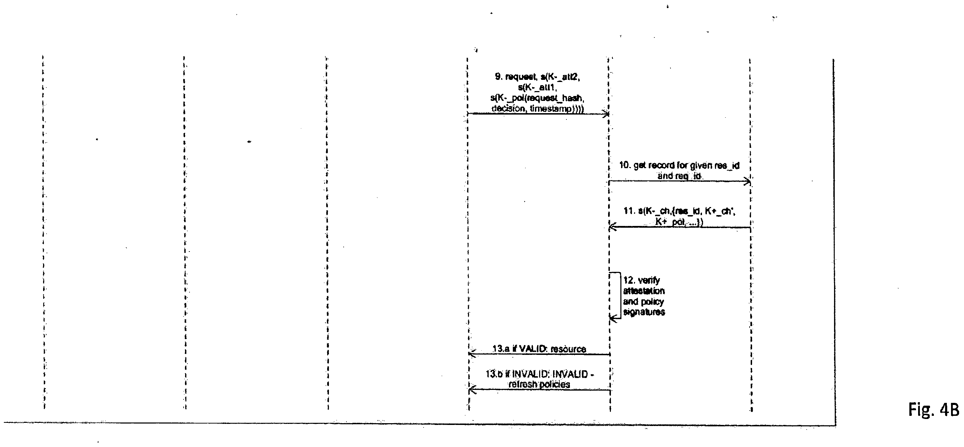

To work correctly, a trusted computation of the authorization decision has to be carried out. Namely, the resource server must have means to verify that the decision is the correct one with respect to the up-to-date policies. To achieve this, there are multiple ways. As an embodiment in Figure 4 which is divided in two parts, i.e. Figure 4A with steps 1 to 8 and Figure 4B with steps 9 to 13, details with respect to a protocol using an attestation principle is shown.

The attestation principle enables any party possessing necessary information to verify that the received message was processed by a given algorithm running on a given type of hardware. This is achieved typically by the presence of a trusted platform module (TPM), secure bootstrapping, etc. The use of an attested Hard- and Software is presented to the relying party by the signature of the message sent.

The trusted platform module provides a degree of security based on hardware and software security measures that is appropriate for working with respective resources. The typical trusted platform module would contain at least a secure internal CPU and storage. In the embodiment two trusted platform modules are employed at the requestor side of the protocol.

The trusted platform module of the requestor authentication module has the function of presenting endpoint requestor's identity. It contains requestor's private key and is able to sign any message without publishing it. It may also enable to store requestor relevant policies and by this speed up the process of policy retrieval for often used resources, if requestor works with different clients. The module also contains the attestation key protected by it.

The trusted platform module of the client provides the attested authorization decision algorithm. The algorithm evaluates all the necessary data and provides a decision about the authorization of requested operation. The algorithm itself is out of scope of this document, however, it is identified by the attestation key, protected by the trusted platform module itself.

There is a trust established between the two trusted platform modules. The attestation principle should be used with respect to trusted platform module. Moreover the trusted platform modules can be merged into a single trusted platform module. In such a case, the implementation must ensure all the security features are preserved with respect to the communication out of the bounds of the relationship between the requestor authentication module and the client.

Step 1 shown in Figure 4 represents the initial action of the requestor that utilizes the client as a mediator to get the resource. The client needs to obtain the policy relevant for given resource and requestor, which is performed in steps 2 to 4.

In the depicted scenario of Figure 4, the policy is retrieved by the requestor authentication module from the policy definition distributor. The policy definition distributor is asked (step 2a) and then resend the encrypted policy to requestor authentication (step 2b). However, other options may be valid. For example the client trusted platform module can cache the policy.

In any case, the requestor authentication module has to be used for policy decryption (step 3) and for signing of the decision. This relaxes the trust constraints in the client trusted platform module, as we prevent the impersonation attack. In the signing process, appropriate method for prevention of replay attack should be used, such as timestamping, or use of a nonce. If the client trusted platform module is trusted to the extension we know the impersonation attack is impossible, the policy private key can be exposed to client trusted platform module and the communication complexity decreased.

After the decision has been made, the client trusted platform module either directly informs the requestor about the deny decision (step 6.a) or sends the request for signing the request identifier (possibly hash) and the decision with the policy private key and attestation key of the requestor authentication module (step 6.b), to which it gets the response (step 7). Subsequently, in step 8 the client trusted platform module signs the received signature with its private attestation key to witness the used Hard- and Software. Then the client trusted platform module sends both the request and signature to the resource server (step 9). If the two trusted platform modules are merged, only a single signature with attestation key is necessary.

The resource server receives the request and the signed decision, and performs the verification. This may require the update of the knowledge of the currently valid policies (step 10 and step 11). The update is invoked according to the resource server's security policy that determines, whether resource server needs to have all the time the freshest policy data, or whether e.g. certain refresh rate is sufficient.

Subsequently, the resource server verifies the attestation and policy signatures. This process is equivalent to the process to verify the valid policy and the valid authorization algorithm.

If verification was successful, the resource server sends the requested resource (step 13.a) back to the client, otherwise it sends the request for refreshment of policies (step 13.b). Step 13.b can also contain the actual policy definition that is considered valid by the resource server, if the resource server possesses (or may simply get) this information.

The verifiable computing e.g., based on the homomorphic encryption is a different approach to ensuring the valid algorithm was used for policy evaluation. It enables to relax the security conditions put on the client. The verifiable computing enables the relying party to trust the authorization decision, without the need of knowledge about the way the decision was achieved. Moreover, the homomorphic encryption based verifiable computing does not disclose the information used in the computation, which brings yet another advantage. This way, the client actually does not need to be a trusted platform module and the attestation signature is exchanged for the verifiable computing assurance.

The following advantages may be achieved:
The resource owner and the requestor (including the trusted platform modules utilized) are the only ones that knows the relevant policies.

The resource server can verify that the correct policy and evaluation mechanism was used for computation of the decision.

The resource server is aware of the requestor giving the consent to the use of the policy.

The resource server does not know the identity of the requestor. More precisely, there is no way for the resource server to learn that identity from the data accessed by resource server e.g. policy verification data.

The requestor knows the authorization decision and cannot be fooled by the resource server.

The requestor performs an authentication with respect to the client.

If the blockchain-based implementation is used, it can be utilized together with the audit records of the requests for forensic purposes.

The requestor-relevant data, e.g., biometrics do not need to be sent to any third party for an authorization evaluation.

Even if resource server does not synchronize the current state of the policies stored in the policy verification distributor, it can verify that the decision was valid at a given time in the past (which may be sufficient, e.g., if we know the policies may change only once a day).

Depending on a use case, the communication complexity may decrease. The client may avoid a request if the client knows that the authorization decision is deny. The communication of the resource server to the policy verification distributor can be switched from synchronous to asynchronous.

The computational effort is distributed between the requestors.

### Example Embodiments

Use case: Wearable e.g. a smart watch
- requestor - athletic club trainer
- client and requestor authentication module - trainer's smart device
- policy registrator, policy verification distributor - public blockchain service
- policy definition distributor - athletic club server
- resource owner - athletic club member
- resource server - member's smart phone
- resource - smart watch

The invention enables to cover the authorization decision method right from the moment the device was assembled, by assigning it with a resource identifier res id that is stored in the very device and unchangeable. The resource identifier res_id should be auto-generated and unknown for the vendor so as the customer who buys the device is the first one to know it, hence, being the only resource owner.

We further assume that the smart watch was bought by an athletic club member who synchronizes it with the member's smart phone. Because the watch is a quite simple device, the phone serves, next to other functions, as a resource server with respect to the watch. The bound between the resource and resource server determines the security of the system. Therefore, at least some form of authentication of the resource server with respect to the resource should be in place. The member needs to give a trainer a permission to read her heartbeat, for which the watch have a sensor, but only during the training hours, and with high confidence it is the trainer who is downloading the data. The member uses a public blockchain service to register the policy verification data and the athletic club server to register the relevant policy definition data (as there is no need to store it in a more public storage).

During the training, the trainer opens the app for seeing the team member heartbeats. The app learns the resource identifier res_id through a short-range communication means, and lets the client trusted platform module in the same device download the policies from the club server (for given resource identifier res_id and requestor currently using the device - the trainer). The client trusted platform module asks the trusted platform module of the requestor authentication module on the same device to decrypt the policies and subsequently computes the decisions. If there is a device for which there is currently no permission given to the trainer, the action of reading for this device is immediately disapproved without any communication with this device. With respect to the policies set for member's watch as a resource, the client trusted platform module checks, whether the time is in the interval of training hours and whether the identity requesting is truly the trainer. For example, it can communicate with the trusted platform module of the requestor authentication module which may enable the physical authentication via fingerprint. Typically, on a single device the trusted platform modules of the client and the requestor authentication module may be a single trusted platform module, so that the communication is provided internally. If the parameters are confirmed, the decision to permit is made and sent to the member's smart phone.

The smart phone uses a public service providing the data about the attestable hard- and software. The smart phone learns from these data and the signature of the decision, that it can trust the decision with some degree of confidence. If the confidence is enough for the resource server, it sends back the resource, in present case a stream of heartbeat data.

Use case: Smart home
- requestor - family member son
- client and requestor authentication module - mobile device with trusted platform module
- resource server, policy registrator, policy verification distributor, policy definition distributor - smart home server
- resource owner - family member father
- resource - garage door

In this embodiment, there is a family member e.g. father having the rights to administer the access policies to all the smart home equipment. The administration may be done via a web-based administration tool. The policies are stored on the smart home server. The smart home server authorizes the policies and serves as both policy verification distributor during the propagation of the data to all the endpoint devices (e.g., thermostat, garage door, etc.), and policy definition distributor during the propagation of the data to the requestors' clients. As in this environment the dynamicity of the policy changes is very low, the changes in the resource-specific policies may infrequently be propagated to the devices, e.g., once a day.

Assuming that the son coming back home after spending a year abroad. The father uses the administration tool from his office to set up the rights for the son to be able to open the garage door. The son returns the next day and wants to park his car. He uses his mobile phone with an application being able to communicate with the smart home network via a short-range communication means and try to open the door. The application finds out it has no policies for this action and contacts the server to download the policies. Subsequently, the authorization decision is computed and sent together with the request for opening to the server. The server verifies the decision according to the refreshed policies and opens the door.

The requestor, i.e. the son is represented in the IT world by information (private keys) stored securely at the trusted platform module of his mobile device.

The son parks every day. The son's mobile device does not need to refresh the policies since the policies are still valid. One day, the son argues with his parents and is thrown out of the house. The father removes all son's access rights. The next day, when the son wants to park again, his mobile device evaluates the old policies and sends the request with the allow decision, but the server responds with invalid state and suggestion to refresh the policies. The mobile device downloads the fresh policies and verifies the denial decision.

This invention has been described with respect to exemplary embodiments. It is understood that changes can be made and equivalents can be substituted to adapt these disclosures to different materials and situations, while remaining with the scope of the invention. The invention is thus not limited to the particular examples that are disclosed, but encompasses all the embodiments that fall within the scope of the claims.

## Claims

1. An authorization decision method for a distributed environment, the authorization decision method comprises a policy verification distributor holding policy verification data identifying a policy declared by a resource owner and applicable on a resource and a requestor,
a policy definition distributor holding policy definition data about the policy,
wherein a requestor asks a resource server via a client for the resource, wherein the client approaches the policy definition distributor to get the policy definition data in order to decide whether a policy relevant for the resource and the requestor is available, and
wherein the resource server approaches the policy verification distributor to get the policy verification data in order to verify an authorization decision, the authorization decision method further comprises a trusted platform module is present for the client and for the requestor,
wherein as an initial step the requestor addresses the client trusted platform module to get the resource,
wherein as a subsequent step the client trusted platform module decides whether a policy relevant for the resource and the requestor is available based on the policy definition data from the policy definition distributor and counts the authorization decision to allow access to the requested resource based on the policy, wherein as a subsequent step, if the authorization decision is to allow access to the requested resource, the client trusted platform module performs an authorization decision signing process, the authorization decision signing process including as a first step that the client trusted platform module sends a request to sign the authorization decision with an attestation key of the requestor trusted platform module to the requestor trusted platform module, as a second step that the client trusted platform module receives the authorization decision with a signature from the requestor trusted platform module, as a third step the client trusted platform module signs the received signature with an attestation key of the client trusted platform module,
wherein as a subsequent step the client trusted platform module sends the request for the resource and the authorization decision with the signed signature to the resource server,
wherein as a subsequent step the resource server performs a verification process including a verification of the signed signature based on the policy verification data received from the policy verification distributor, and
wherein as a subsequent step, if verification was successful, the resource server sends the requested resource to the client.

2. The authorization decision method according to claim 1, wherein the resource owner transmits the policy verification data to a policy registrator in order to register a valid policy, the policy registrator performing an authorization action deciding whether the resource owner is allowed to declare the policy for the resource, wherein upon registering the policy as valid the policy registrator transmits the policy verification data to the policy verification distributor.

3. The authorization decision method according to claim 1 or 2, wherein the ownership of the resource is represented during the initial registration of resource by knowledge of a unique identifier connected to the resource, subsequently by knowledge of a cryptographic primitive protecting bound to the identifier.

4. The authorization decision method according to claim 3, wherein the resource server approaches the policy verification distributor for the last record of policy verification data with respect to the resource identifier, wherein in response the policy verification distributor transfers the record in a trusted manner.

5. The authorization decision method according to claim 3 or 4, wherein the requestor approaches the policy definition distributor for the record of policy definition data with respect to the resource identifier and a requestor identifier, wherein in response the policy definition distributor transfers the record.

6. The authorization decision method according to any of claims 1 to 5, wherein a blockchain-based implementation of the policy declaration process of the policy registrator and the policy verification distributor is carried out.

## Patentansprüche

1. Autorisierungsentscheidungsverfahren für eine verteilte Umgebung, wobei das Autorisierungsentscheidungsverfahren umfasst, dass ein Richtlinienverifizierungsverteiler Richtlinienverifizierungsdaten verwaltet, die eine Richtlinie identifizieren, die von einem Ressourcenbesitzer erklärt wird und auf eine Ressource und einen Anforderer angewendet werden kann,
ein Richtliniendefinitionsverteiler Richtliniendefinitionsdaten über die Richtlinie verwaltet,
wobei ein Anforderer bei einem Ressourcenserver über einen Client um die Ressource anfragt,
wobei der Client sich an den Richtliniendefinitionsverteiler wendet, um die Richtliniendefinitionsdaten zu erhalten, um zu entscheiden, ob eine für die Ressource und den Anforderer relevante Richtlinie verfügbar ist, und
wobei der Ressourcenserver sich an den Richtlinienverifizierungsverteiler wendet, um die Richtlinienverifizierungsdaten zu erhalten, um eine Autorisierungsentscheidung zu verifizieren,
wobei das Autorisierungsverfahren ferner umfasst, dass ein vertrauenswürdiges Plattformmodul für den Client und den Anforderer vorhanden ist,
wobei als ein erster Schritt der Anforderer sich an das vertrauenswürdige Client-Plattformmodus richtet, um die Ressource zu erhalten,
wobei als ein folgender Schritt das vertrauenswürdige Client-Plattformmodul basierend auf den Richtliniendefinitionsdaten vom Richtliniendefinitionsverteiler entscheidet, ob eine für die Ressource und den Anforderer relevante Richtlinie verfügbar ist, und basierend auf der Richtlinie die Autorisierungsentscheidung berechnet, um Zugriff auf die angeforderte Ressource zu erlauben,
wobei als ein nächster Schritt, wenn die Autorisierungsentscheidung ist, Zugriff auf die angeforderte Ressource zu erlauben, das vertrauenswürdige Client-Plattformmodul einen Autorisierungsentscheidungssignierungsprozess durchführt, wobei der Autorisierungsentscheidungssignierungsprozess als einen ersten Schritt umfasst, dass das vertrauenswürdige Client-Plattformmodul eine Anforderung zum Signieren der Autorisierungsentscheidung mit einem Nachweisschlüssel an das vertrauenswürdige Anforderer-Plattformmodul sendet, als einen zweiten Schritt, dass das vertrauenswürdige Client-Plattformmodul die Autorisierungsentscheidung mit einer Signatur vom vertrauenswürdigen Anforderer-Plattformmodul empfängt, und als einen dritten Schritt, dass das vertrauenswürdige Client-Plattformmodul die empfangene Signatur mit einem Nachweisschlüssel des vertrauenswürdigen Client-Plattformmoduls signiert,
wobei als ein folgender Schritt das vertrauenswürdige Client-Plattformmodul die Anforderung der Ressource und die Autorisierungsentscheidung mit der signierten Signatur an den Ressourcenserver sendet,
wobei als ein folgender Schritt der Ressourcenserver einen Verifizierungsprozess durchführt, der eine Verifizierung der signierten Signatur basierend auf den vom Richtlinienverifizierungsverteiler empfangenen Richtlinienverifizierungsdaten durchführt, und
wobei als ein folgender Schritt, wenn die Verifizierung erfolgreich war, der Ressourcenserver die angeforderte Ressourcen an den Client sendet.

2. Autorisierungsentscheidungsverfahren nach Anspruch 1, wobei der Ressourcenbesitzer die Richtlinienverifizierungsdaten an einen Richtlinienregistrator sendet, um eine gültige Richtlinien zu registrieren, wobei der Richtlinienregistrator eine Autorisierungsaktion durchführt, die entscheidet, ob der Ressourcenbesitzer die Richtlinie für die Ressource erklären darf, wobei, wenn die Richtlinie als gültig registriert wird, der Richtlinienregistrator die Richtlinienverifizierungsdaten an den Richtlinienverifizierungsverteiler sendet.

3. Autorisierungsentscheidungsverfahren nach Anspruch 1 oder 2, wobei das Eigentum an der Ressource während der Erstregistrierung einer Ressource durch Kenntnis einer eindeutigen Kennung, die mit der Ressource verbunden ist, und anschließend durch Kenntnis eines kryptografischen Primitivs dargestellt wird, das die Grenze zur Kennung schützt.

4. Autorisierungsentscheidungsverfahren nach Anspruch 3, wobei der Ressourcenserver sich für den letzten Richtlinienverifizierungsdatensatz in Bezug auf die Ressourcenkennung an den Richtlinienverifizierungsverteiler wendet, wobei der Richtlinienverifizierungsverteiler als Antwort den Datensatz auf vertrauenswürdige Weise sendet.

5. Autorisierungsentscheidungsverfahren nach Anspruch 3 oder 4, wobei der Anforderer sich für den Richtliniendefinitionsdatensatz in Bezug auf die Ressourcenkennung und eine Anfordererkennung an den Richtliniendefinitionsverteiler wendet, wobei der Richtliniendefinitionsverteiler als Antwort den Datensatz sendet.

6. Autorisierungsentscheidungsverfahren einem der Ansprüche 1 bis 5, wobei eine blockkettenbasierte Implementierung des Richtlinienerklärungsprozesses des Richtlinienregistrators und des Richtlinienverifizierungsverteilers durchgeführt wird.

## Revendications

1. Procédé de décision d'autorisation pour un environnement distribué, le procédé de décision d'autorisation comprenant
un distributeur de vérification de politique détenant des données de vérification de politique qui identifient une politique déclarée par un propriétaire de ressource et applicable à une ressource et un demandeur,
un distributeur de définition de politique détenant des données de définition de politique relatives à la politique,
dans lequel le demandeur demande la ressource à un serveur de ressource par l'intermédiaire d'un client, dans lequel le client contacte le distributeur de définition de politique pour obtenir les données de définition de politique afin de décider qu'une politique pertinente pour la ressource et le demandeur est disponible ou non, et
dans lequel le serveur de ressource contacte le distributeur de vérification de politique pour obtenir les données de vérification de politique afin de vérifier une décision d'autorisation,
le procédé de décision d'autorisation comprenant en outre un module de plate-forme fiable présent pour le client et pour le demandeur,
dans lequel comme étape initiale le demandeur s'adresse au module de plate-forme fiable client pour obtenir la ressource,
dans lequel comme étape suivante le module de plate-forme fiable client décide qu'une politique pertinente pour la ressource et le demandeur est disponible ou non en fonction des données de définition de politique provenant du distributeur de définition de politique et compte la décision d'autorisation pour permettre l'accès à la ressource demandée en fonction de la politique,
dans lequel comme étape suivante, si la décision d'autorisation est d'autoriser l'accès à la ressource demandée, le module de plate-forme fiable client réalise un processus de signature de décision d'autorisation, le processus de signature de décision d'autorisation comportant comme première étape l'envoi par le module de plate-forme fiable client d'une demande de signature de la décision d'autorisation avec une clé d'attestation du module de plate-forme fiable demandeur ou module de plate-forme fiable demandeur, comme deuxième étape la réception par le module de plate-forme fiable client de la décision d'autorisation avec une signature à partir du module de plate-forme fiable demandeur, comme troisième étape la signature par le module de plate-forme fiable client de la signature reçue avec une clé d'attestation du module de plate-forme fiable client, dans lequel comme étape suivante le module de plate-forme fiable client envoie la demande de la ressource et la décision d'autorisation avec la signature signée au serveur de ressource,
dans lequel comme étape suivante le serveur de ressource réalise un processus de vérification comportant une vérification de la signature signée en fonction des données de vérification de politique reçues à partir du distributeur de vérification de politique, et
dans lequel comme étape suivante, si la vérification a réussi, le serveur de ressource envoie la ressource demandée au client.

2. Procédé de décision d'autorisation selon la revendication 1, dans lequel le propriétaire de ressource transmet les données de vérification de politique à un enregistreur de politique afin d'enregistrer une politique valable, l'enregistreur de politique réalisant une action d'autorisation qui décide que le propriétaire de la ressource est autorisé ou non à déclarer la politique pour la ressource, l'enregistreur de politique, à l'enregistrement de la politique en tant que politique valable, transmettant les données de vérification de politique au distributeur de vérification de politique.

3. Procédé de décision d'autorisation selon la revendication 1 ou 2, dans lequel la propriété de la ressource est représentée durant l'enregistrement initial de la ressource par connaissance d'un identifiant unique connecté à la ressource, ensuite par la connaissance d'une protection par primitive cryptographique liée à l'identifiant.

4. Procédé de décision d'autorisation selon la revendication 3, dans lequel le serveur de ressource contacte le distributeur de vérification de politique afin d'obtenir le dernier enregistrement de données de vérification de politique relativement à l'identifiant de ressource, le distributeur de vérification de politique, en réponse, transférant l'enregistrement d'une manière fiable.

5. Procédé de décision d'autorisation selon la revendication 3 ou 4, dans lequel le demandeur contacte le distributeur de définition de politique pour obtenir l'enregistrement de données de définition de politique relativement à l'identifiant de ressource et à un identifiant de demandeur, le distributeur de définition de politique, en réponse, transférant l'enregistrement.

6. Procédé de décision d'autorisation selon l'une quelconque des revendications 1 à 5, dans lequel est réalisée une mise en œuvre à base de chaîne de blocs du processus de déclaration de politique de l'enregistreur de politique et du distributeur de vérification de politique.
